(19) Europäisches Patentamt
European Patent Office
Office européen des brevets

(11) **EP 2 880 550 B1**

(12) **EUROPEAN PATENT SPECIFICATION**

(45) Date of publication and mention
of the grant of the patent:
**12.02.2020 Bulletin 2020/07**

(21) Application number: **13824898.4**

(22) Date of filing: **30.07.2013**

(51) Int Cl.:
*H04L 29/08* (2006.01)  *H04L 29/14* (2006.01)
*H04L 12/24* (2006.01)  *H04L 12/26* (2006.01)
*H04L 12/775* (2013.01)  *G06F 11/20* (2006.01)
*G06F 15/163* (2006.01)

(86) International application number:
**PCT/US2013/052652**

(87) International publication number:
**WO 2014/022350 (06.02.2014 Gazette 2014/06)**

(54) **CONNECTION MESH IN MIRRORING ASYMMETRIC CLUSTERED MULTIPROCESSOR SYSTEMS**

VERBINDUNGSNETZ ZUM MIRRORING IN ASYMMETRISCHEN GECLUSTERTEN
MULTIPROZESSORSYSTEMEN

MAILLAGE DE CONNEXION DANS DES SYSTÈMES MULTIPROCESSEURS ASYMÉTRIQUES
GROUPÉS D'ÉCRITURE MIROIR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.07.2012 US 201261677867 P
14.03.2013 US 201313828664**

(43) Date of publication of application:
**10.06.2015 Bulletin 2015/24**

(73) Proprietor: **F5 Networks, Inc
Seattle, WA 98104-1663 (US)**

(72) Inventors:
• **KING, Anthony
Seattle, WA 98119 (US)**
• **SZABO, Paul, I.
Seattle, WA 98119 (US)**
• **BAUMANN, William, Ross
Seattle, WA 98119 (US)**

(74) Representative: **K2 IP Limited
c/o Keltie LLP
No.1 London Bridge
London SE1 9BA (GB)**

(56) References cited:
**JP-A- 2005 506 726      JP-A- 2007 502 479
US-A1- 2006 143 497    US-A1- 2007 192 769
US-A1- 2009 216 920    US-A1- 2010 128 598
US-B1- 8 139 492**

• **RYAN K L KO ET AL: "Overcoming Large Data
Transfer Bottlenecks in RESTful Service
Orchestrations", WEB SERVICES (ICWS), 2012
IEEE 19TH INTERNATIONAL CONFERENCE ON,
IEEE, 24 June 2012 (2012-06-24), pages 654-656,
XP032217758, DOI: 10.1109/ICWS.2012.107 ISBN:
978-1-4673-2131-0**
• **FORTIOSTM FORTIOSTM HANDBOOK: HIGH
AVAILABILITY 17 November 2010, XP055184831**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

## TECHNICAL FIELD

The present embodiments relate generally to network communications, and more particularly, but not exclusively, to mirroring computing devices on a primary chassis to computing devices on a failover chassis using a connection mesh.

## TECHNICAL BACKGROUND

There is a persistent need for high availability computing services. Computing applications, including mission critical applications, are increasingly being processed by data centers, particularly as cloud computing architectures are embraced. At the same time, monolithic computing devices are being replaced with one or more chassis, each of which contains groups of less expensive computing devices, such as blade servers, operating in parallel.

Availability of a chassis is often improved by mirroring. For example, a primary chassis may be mirrored by a failover chassis, such that the failover chassis takes over processing for the primary chassis in the case of a device failure (or any other error) on the primary chassis. However, while a chassis may fail as a unit, it is also possible for one or more individual computing devices in the primary chassis to fail, while the remaining computing devices continue to function. Moreover, one or more computing devices on the failover chassis may fail. Mirroring between computing devices in these scenarios is an ongoing problem. Therefore, it is with respect to these considerations and others that the present embodiments are drawn.

US 2010/128598 describes systems and methods for maintaining persistence of a backup virtual server on connections currently serviced by the backup virtual server. A virtual server operating on an intermediary network device and identified as a primary virtual server for a first connection may receive a request via the first connection. The intermediary device may forward the first request to a backup virtual server of the virtual server in response to identifying that the virtual server is unavailable. The intermediary device may later identify that the virtual server is available. The virtual server may establish a new connection responsive to receiving a connection request while the intermediary device may forward a second request received via the first connection to the backup virtual server instead of the virtual server responsive to identifying that the virtual server is configured not to pre-empt the backup virtual server from maintaining connections currently maintained by the backup virtual server.

### Summary of Invention

The present invention provides a primary chassis as set forth in claim 1.

The present invention also provides a system comprising a primary chassis, as set forth in claim 7.

The present invention also provides a non-transitory processor readable storage medium as set forth in claim 12.

## BRIEF DESCRIPTION OF THE DRAWINGS

Non-limiting and non-exhaustive embodiments are described with reference to the following drawings. In the drawings, like reference numerals refer to like parts throughout the various figures unless otherwise specified.

For a better understanding of the described embodiments, reference will be made to the following Detailed Description, which is to be read in association with the accompanying drawings, wherein:

FIGURE 1 shows components of an illustrative environment in which the described embodiments may be practiced;
FIGURE 2 illustrate one embodiment of a disaggregator device;
FIGURE 3 illustrates one embodiment of a computing device; and
FIGURE 4 illustrates a logical flow diagram generally showing one embodiment of a process for creating a connection from a primary chassis to a failover chassis using a connection mesh.

## DETAILED DESCRIPTION

In the following detailed description of exemplary embodiments, reference is made to the accompanied drawings, which form a part hereof, and which show by way of illustration examples by which the described embodiments may be practiced. Sufficient detail is provided to enable those skilled in the art to practice the described embodiments, and it is to be understood that other embodiments may be utilized, and other changes may be made, without departing from the spirit or scope. Furthermore, references to "one embodiment" are not required to pertain to the same or singular embodiment, though they may. The following detailed description is, therefore, not to be taken in a limiting sense, and the scope of the described embodiments is defined only by the appended claims.

Throughout the specification and claims, the following terms take the meanings explicitly associated herein, unless the context clearly dictates otherwise. As used herein, the term "or" is an inclusive "or" operator, and is equivalent to the term "and/or," unless the context clearly dictates otherwise. The term "based on" is not exclusive and allows for being based on additional factors not described, unless the context clearly dictates otherwise. In addition, throughout the specification, the meaning of "a," "an," and "the" include plural references. The meaning of "in" includes "in" and "on."

As used herein, the term "network connection" (also referred to as a "connection") refers to a collection of links and/or software elements that enable a computing device to communicate with another computing device over a network. One such network connection may be a Transmission Control Protocol (TCP) connection. TCP connections are virtual connections between two network nodes, and are typically established through a TCP handshake protocol. The TCP protocol is described in more detail in Request for Comments (RFC) 793, available from the Internet Engineering Task Force (IETF), and is hereby incorporated by reference in its entirety. A network connection "over" a particular path or link refers to a network connection that employs the specified path or link to establish and/or maintain a communication.

As used herein, a chassis refers to an enclosure that houses a plurality of physical computing devices (hereinafter referred to as computing devices). In one embodiment, the computing devices may comprise blade servers, however any other type of computing device is similarly contemplated. In one embodiment, a chassis may include a disaggregator (DAG) as defined below.

As used herein, a disaggregator (DAG) refers to a computing device that routes incoming connections to one of a plurality of computing devices. In one embodiment, a DAG can route incoming connections to particular computing devices based on a hash algorithm and one or more attributes associated with the incoming connection. Attributes may include, but are not limited to, a source port number, a destination port number, a source IP address, a destination IP address, other connection fields within one or more packet headers associated with a connection, or the like. In some embodiments, the source port and destination port numbers may include a TCP source port number and TCP destination port number, respectively. For example, the DAG may create a hash value by hashing a source (remote) port and a destination (local) port of the incoming connection. The DAG may then route the incoming connection to a particular computing device based on a pre-determined mapping of hash values to mesh connections and an association between mesh connections and computing devices. Other techniques of routing incoming network connections to particular computing devices, includes different hash algorithms, different attributes associated with the incoming connection, different algorithms for mapping hash values to mesh connections, and different techniques for mapping mesh connections to computing devices, are similarly contemplated.

Briefly stated, embodiments are directed towards creating a mesh connection between a primary chassis and a failover chassis to facilitate two-way communication between a first computing device within the primary chassis and a second computing device within the failover chassis. The primary chassis may include a first plurality of computing devices and the failover chassis may include a second plurality of computing devices. In some embodiments, the primary chassis and failover chassis may be asymmetric, such that a number of computing devices within the primary chassis may be different from a number of computing devices within the failover chassis. In some embodiments, a mesh connection may be established between each primary computing device within the primary chassis and each secondary computing device within the failover chassis.

In some embodiments, packets of a first connection from a client device may be routed through a first computing device within the primary chassis to a mirrored second computing device within the failover chassis utilizing one of the mesh connections. In one embodiment, the first computing device and the second computing device may forward packets back and forth utilizing a modified packet header. In one embodiment, the modified packet header may include a modified source port number that identifies the first computing device and the second computing device. In some embodiments, the modified source port number combines the first computing device identifier and second computing device identifier using a hash. The first computing device can forward the packets, and/or information about the packets, to the failover chassis, which can employ the modified source port number to forward the packets to the mirrored second computing device. In some embodiments, the second computing device can forward packets, and/or information about the packets, back to the first computing device by utilizing another modified source port number, wherein the other modified source port number includes the second computing device identifier and the first computing device identifier, in a (or order) position from the first modified source port number. In some other embodiments, a packet header may be modified to include a flag that indicates a modified source port address and/or the packet/information flow direction between the first computing device and the second computing device. It should be noted that other information may be modified in the packet header in addition to, or instead of the source port number. For example, Internet Protocol (IP) addresses (source and/or destination), Layer 2, Layer 3, and/or Layer 4 data (of the seven layer Open Systems Interconnection (OSI) model) within the packet header may be modified.

In other embodiments, however instead of providing a flag to the DAG to indicate special processing is to be performed on the packets, the mesh connections can be created by encapsulating TCP frames for each direction of a mirrored channel using User Datagram Protocol (UDP) frames. In these embodiments, the UDP frames have source/destination ports that cause the packets to be sent to a specific second computing device on the failover chassis. A return packet by also be encapsulated on a connection with source/destination ports that are directed to hash to the other end of the connection, which in at least one embodiment need not be a same set of ports as originally sent from. Still other mechanisms may be used, including explicitly specifying port information, using ephemeral port numbers for traffic returned from the failover chassis, where the ephemeral port numbers are computed from an initiating ephemeral port number, as discussed further below.

When the second computing device fails, the first computing device selects another secondary (available) computing device within the failover chassis using one of the existing and available mesh connections. The use of existing and available mesh connections between computing devices in the primary chassis and the failover chassis is directed towards fast failover operations for maintaining backups of connections.

**Illustrative Operating Environment**

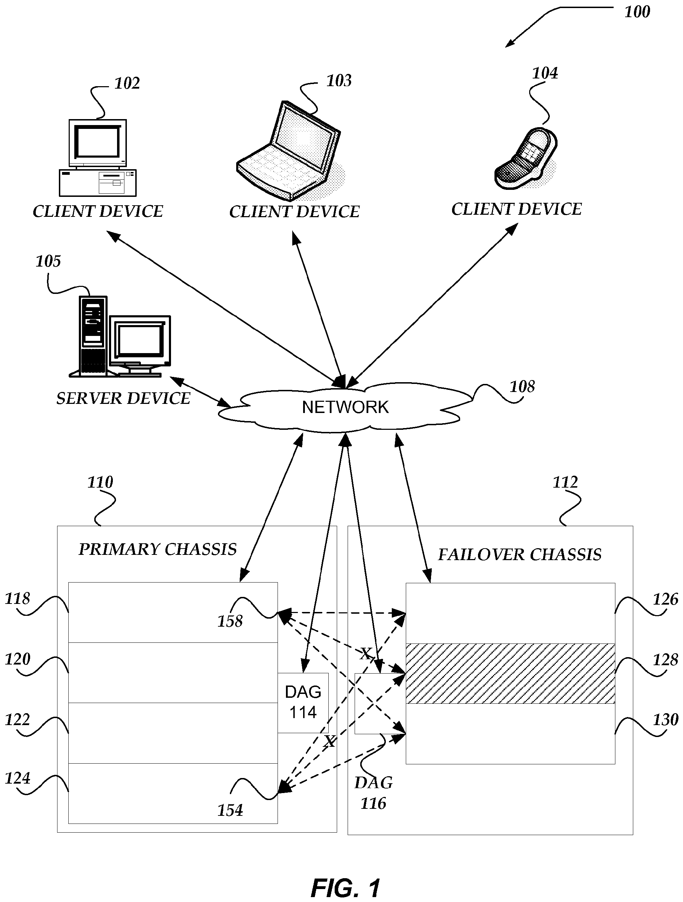

FIGURE 1 shows components of an illustrative environment 100 in which the described embodiments may be practiced. Not all the components may be required to practice the described embodiments, and variations in the arrangement and type of the components may be made without departing from the spirit or scope of the described embodiments. FIGURE 1 illustrates client devices 102-104, network 108, server device 105, and primary and secondary chassis 110 and 112, respectively.

Generally, client devices 102-104 may include virtually any computing device capable of connecting to another computing device and transmitting and/or receiving information. For example, client devices 102-104 may include personal computers, multiprocessor systems, microprocessor-based or programmable consumer electronics, network devices, server devices, virtual machines, and the like. Client devices 102-104 may also include portable devices such as, cellular telephones, smart phones, display pagers, radio frequency (RF) devices, infrared (IR) devices, Personal Digital Assistants (PDAs), handheld computers, wearable computers, tablet computers, integrated devices combining one or more of the preceding devices, and the like. Client devices 102-104 may also include virtual computing devices running in a hypervisor or some other virtualization environment. As such, client devices 102-104 may range widely in terms of capabilities and features.

Network 108 is configured to couple network enabled devices, such as client devices 102-104 and chassis 110 and 112, with other network enabled devices. Network 108 is enabled to employ any form of computer readable media for communicating information from one electronic device to another. In one embodiment, network 108 may include the Internet, and may include local area networks (LANs), wide area networks (WANs), direct connections, such as through a universal serial bus (USB) port, other forms of computer-readable media, or any combination thereof. On an interconnected set of LANs, including those based on differing architectures and protocols, a router may act as a link between LANs to enable messages to be sent from one to another. Also, communication links within LANs typically include fiber optics, twisted wire pair, or coaxial cable, while communication links between networks may utilize analog telephone lines, full or fractional dedicated digital lines including T1, T2, T3, and T4, Integrated Services Digital Networks (ISDNs), Digital Subscriber Lines (DSLs), wireless links including satellite links, or other communications links known to those skilled in the art.

Network 108 may further employ a plurality of wireless access technologies including, but not limited to, 2nd (2G), 3rd (3G), 4th (4G) generation radio access for cellular systems, Wireless-LAN, Wireless Router (WR) mesh, and the like. Access technologies such as 2G, 3G, 4G, and future access networks may enable wide area coverage for network devices, such as client devices 102-104, or the like, with various degrees of mobility. For example, network 108 may enable a radio connection through a radio network access such as Global System for Mobil communication (GSM), General Packet Radio Services (GPRS), Enhanced Data GSM Environment (EDGE), Wideband Code Division Multiple Access (WCDMA), and the like.

Furthermore, remote computers and other related electronic devices could be remotely connected to either LANs or WANs via a modem and temporary telephone link, a DSL modem, a cable modem, a fiber optic modem, an 802.11 (Wi-Fi) receiver, and the like. In essence, network 108 includes any communication method by which information may travel between one network device and another network device.

Server device 105 may include any computing device capable of communicating packets to another network device, such as, but not limited to chassis devices 110 and/or 112, and at least one of client devices 102-104. In one embodiment, server device 105 may be configured to operate as a website server. However, server device is not limited to web server devices, and may also operate a messaging server, a File Transfer Protocol (FTP) server, a database server, content server, and the like. Although FIGURE 1 illustrates service device 105 as a single device, embodiments of the invention are not so limited. For example, server device 105 may include a plurality of distinct network devices. In some embodiments, each distinct network device may be configured to perform a different operation, such as one network device is configured as a messaging server, while another network device is configured as a database server, or the like.

Devices that may operate as server device 105 includes personal computers, desktop computers, multiprocessor systems, microprocessor-based or programmable consumer electronics, network PCs, server devices, and the like.

In some embodiments, a client device, such as client device 102 may request content, or other actions, from server device 105. As disclosed herein, such connections from the client device would then be routed through a computing device within primary chassis 110 and/or failover chassis 112 and forwarded to server device 105. Responses from server device 105 would similarly be routed through a computing device within primary chassis 110 and/or failover chassis 112 and forwarded to the requesting client device.

Each of chassis devices 110 and 112 may include a DAG and a plurality of computing devices. Primary Chassis 110 includes DAG 114 and computing devices 118, 120, 122, and 124, while failover chassis 112 includes DAG 116 and computing devices 126, 128, and 130. Although FIG. 1 illustrates that failover chassis 112 has less computing devices than primary chassis 110, other configurations are also envisaged. For example, in other embodiments, primary chassis 110 and failover chassis 112 may include a same number of computing devices, or primary chassis 110 might include less computing devices than failover chassis 112. Thus, a variety of configurations and arrangements are considered.

As shown, a computing device within chassis 110 may open and maintain connections with each of the available computing devices within chassis 112. Such connections may be configured to form a mesh of connections. For example, as illustrated mesh connections 158 show connections from computing device 118 with each of computing devices 126, 128, and 130. Similarly, mesh connections 154 show connections from computing device 124 with each of computing devices 126, 128, and 130. Although not illustrated (for simplicity of the drawing) computing devices 120 and 122 may include similar mesh connections. In some embodiments, these mesh connections are bi-directional, such that messages and other information may be sent by a computing device in either the primary chassis 110 or in the failover chassis 112.

As discussed further below, computing device 128 is shown grayed out to represent a failover condition. In this situation, the connection from each of the computing devices in the primary chassis 110 to the failed over computing device 128, would then become inoperable - shown with the "X" over the connection.

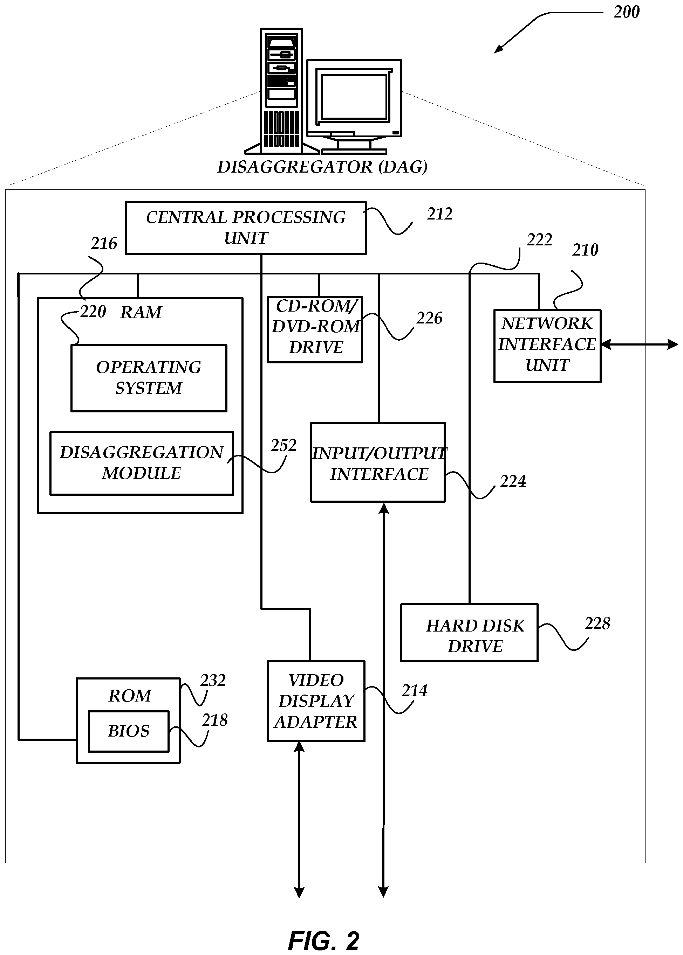

While FIGURE 1 illustrates each chassis physically housing a DAG and a plurality of computing devices, in another embodiment, the chassis and/or one of the components within the chassis may be virtual devices. For example, a virtual chassis may associate a physical DAG and a plurality of physical computing devices. Alternatively, one or more of the plurality of computing devices may be virtual machines in communication with a physical DAG and associated by a virtual chassis. In some embodiments, the functions of DAG 114 and DAG 116 may be implemented by and/or executed on a Field Programmable Gate Array (FPGA), application specific integrated circuit (ASIC), in L2 switching hardware, network processing unit (NPU), or other computing device, such as DAG device 200 of FIGURE 2.

Each of computing devices 118, 120, 122, 124, 126, 128, and 130 may include one or more processor cores (not shown). In one embodiment, each processor core operates as a separate computing device. For example, a computing device that includes 4 cores may operate, and be treated by a DAG, as 4 separate computing devices. Thus, throughout this disclosure, any reference to a computing device also refers to one of many cores executing on a computing device. In one embodiment, a computing device may be designed to fail as a unit. In this embodiment, a failure to a particular computing device may cause all processor cores included in that computing device to fail.

In some other embodiments, each of computing devices 118, 120, 122, 124, 126, 128, and 130 may include a separate DAG. In one such embodiment, each DAG may correspond to one or more computing devices. In some embodiments, a combined computing device and DAG may share a processor core or utilize separate processor cores to perform actions of the computing device and the DAG as described in more detail below.

### Illustrative Disaggregator Device Environment

FIGURE 2 illustrates one embodiment of disaggregator (DAG) device. DAG device 200 may include many more or less components than those shown. The components shown, however, are sufficient to disclose an illustrative embodiment. DAG device 200 may represent, for example, DAG 114 or DAG 116 of FIGURE 1. However, the invention is not so limited and an FPGA, ASIC, L2 switching hardware, NPU, or the like may be utilized to the functions of a DAG, such as DAG 114 or DAG 116 of FIGURE 1.

DAG device 200 includes central processing unit 212, video display adapter 214, and a mass memory, all in communication with each other via bus 222. The mass memory generally includes Random Access Memory (RAM) 216, Read Only Memory (ROM) 232, and one or more permanent mass storage devices, such as hard disk drive 228, tape drive, Compact-Disc ROM (CD-ROM)/Digital Versatile Disc ROM (DVD-ROM) drive 226, and/or floppy disk drive. Hard disk drive 228 may be utilized to store, among other things, the state of connections routed by the DAG, health status of the chassis the DAG is housed in or associated with, and the like. The mass memory stores operating system 220 for controlling the operation of DAG device 200. Basic input/output system ("BIOS") 218 is also provided for controlling the low-level operation of DAG device 200. DAG device 200 also includes Disaggregation module 252.

As illustrated in FIGURE 2, DAG device 200 also can communicate with the Internet, or some other communications network via network interface unit 210, which is constructed for use with various communication protocols including the TCP/IP protocol. Network interface unit 210 is sometimes known as a transceiver, transceiving device, or network interface card (NIC).

DAG device 200 may also include input/output interface 224 for communicating with external devices, such as a mouse, keyboard, scanner, or other input/output devices not shown in FIGURE 2.

The mass memory as described above illustrates another type of computer-readable media, namely computer storage media. Computer storage media may include volatile, nonvolatile, removable, and non-removable media implemented in any method or technology for storage of information, such as computer readable instructions, data structures, program modules, or other data. Examples of computer storage media include RAM, ROM, Electrically Erasable Programmable Read-Only Memory (EEPROM), flash memory or other memory technology, CD-ROM, DVD or other optical storage, magnetic cassettes, magnetic tape, magnetic disk storage or other magnetic storage devices, or any other non-transitory medium which can be used to store the desired information and which can be accessed by a computing device.

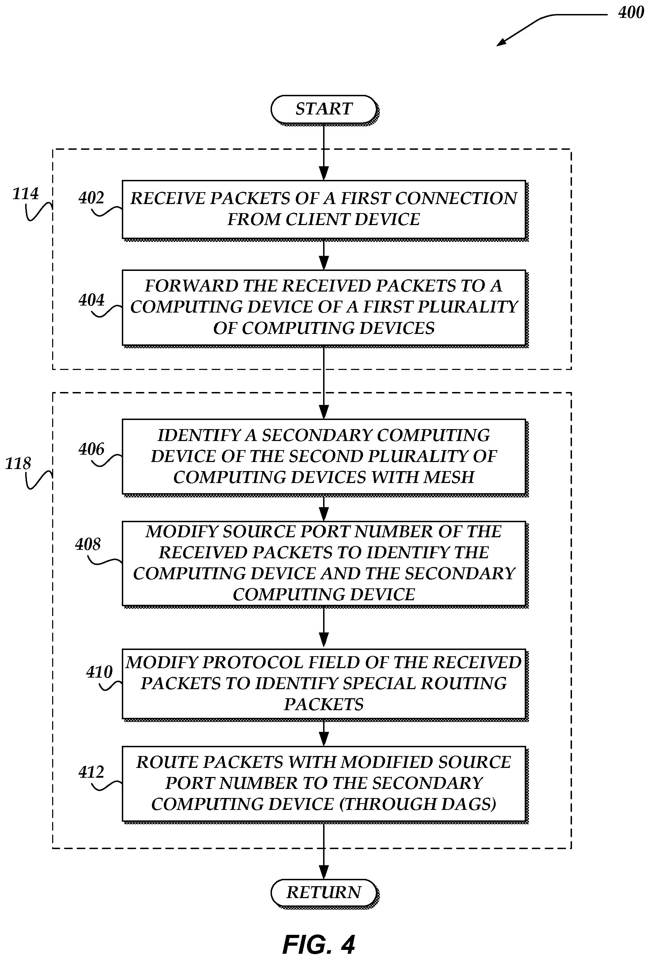

The mass memory also stores program code and data. Disaggregation module 252 is loaded into mass memory and run on operating system 220. In one embodiment, disaggregation module 252 may receive a packet over a connection with a primary computing device, and forward the packet to a secondary computing device using a modified source port number and modified destination address that includes the failover chassis address. Further details of the disaggregation module 252 are as discussed below in conjunction with FIGURE 4.

**Illustrative Computing Device Environment**

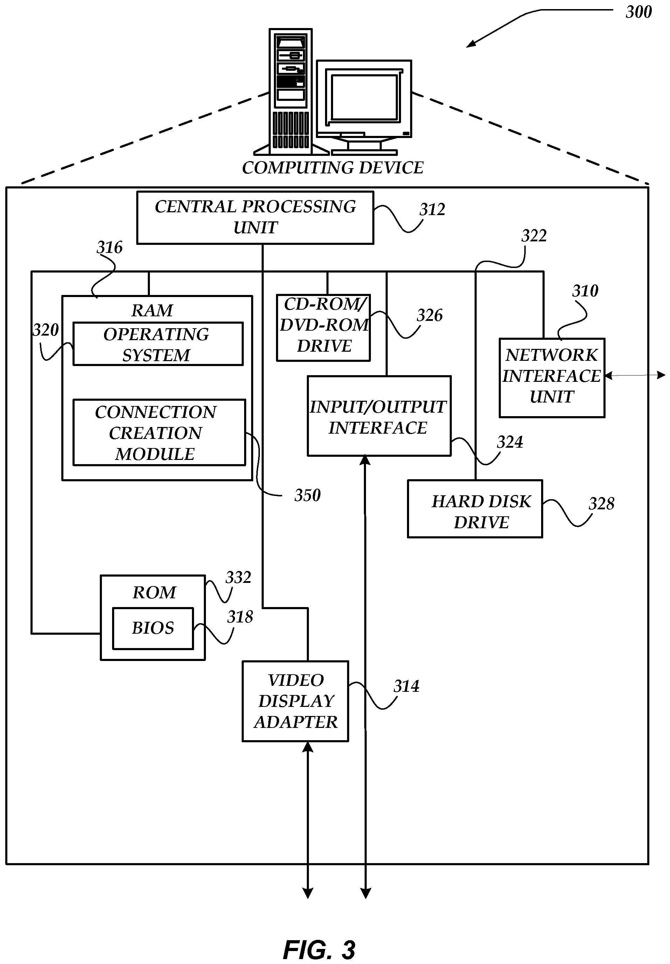

FIGURE 3 illustrates one embodiment of a computing device. Computing device 300 may include many more components than those shown. The components shown, however, are sufficient to disclose an illustrative embodiment for practicing the embodiments. Computing device 300 may represent, for example, one of computing devices 118, 120, 122, 124, 126, 128, or 130 of FIGURE 1.

Computing device 300 includes central processing unit 312, video display adapter 314, and a mass memory, all in communication with each other via bus 322. The mass memory generally includes RAM 316, ROM 332, and one or more permanent mass storage devices, such as hard disk drive 328, tape drive, CD-ROM/DVD-ROM drive 326, and/or floppy disk drive. The mass memory stores operating system 320 for controlling the operation of server device 300. BIOS 318 is also provided for controlling the low-level operation of computing device 300. As illustrated in FIGURE 3, computing device 300 also can communicate with the Internet, or some other communications network, via network interface unit 310, which is constructed for use with various communication protocols including the TCP/IP protocol. Network interface unit 310 is sometimes known as a transceiver, transceiving device, or network interface card (NIC).

Computing device 300 may also include input/output interface 324 for communicating with external devices, such as a mouse, keyboard, scanner, or other input devices not shown in FIGURE 3.

The mass memory as described above illustrates another type of computer-readable media, namely computer storage media. Computer storage media may include volatile, nonvolatile, removable, and non-removable media implemented in any method or technology for storage of information, such as computer readable instructions, data structures, program modules, or other data. Examples of computer storage media include RAM, ROM, Electrically Erasable Programmable Read-Only Memory (EEPROM), flash memory or other memory technology, CD-ROM, DVD or other optical storage, magnetic cassettes, magnetic tape, magnetic disk storage or other magnetic storage devices, or any other non-transitory medium which can be used to store the desired information and which can be accessed by a computing device.

Connection creation module 350 may be loaded into mass memory and run on operating system 320. In one embodiment, connection creation module 350 can create a connection to another chassis, such as a failover chassis. In one embodiment, connection creation module 350 can create the mesh connections with attributes such that the DAG of the other chassis will route the connection to a computing device associated with a particular mesh connection. Connection creation is discussed in more detail in conjunction with FIGURE 4.

In one embodiment, the computing device 300 includes at least one Application Specific Integrated Circuit (ASIC) chip (not shown) coupled to bus 322. The ASIC chip can include logic that performs some of the actions of computing device 300. For example, in one embodiment, the ASIC chip can perform a number of packet processing functions for incoming and/or outgoing packets. In one embodiment, the ASIC chip can perform at least a portion of the logic to enable the operation of connection creation module 350.

In one embodiment, computing device 300 can further include one or more field-programmable gate arrays (FPGA) (not shown), instead of, or in addition to, the ASIC chip. A number of functions of the computing device can be performed by the ASIC chip, the FPGA, by CPU 312 with instructions stored in memory, or by any combination of the ASIC chip, FPGA, and CPU.

## Generalized Operation

The operation of certain aspects will now be described with respect to FIGURE 4. FIGURE 4 illustrates a logical flow diagram generally showing one embodiment of a process for managing mesh connections from a primary chassis to a failover chassis. In one embodiment, process 400 may be implemented by chassis 110 of FIGURE 1. In another embodiment, blocks 402 and 404 may be implemented by DAG 114 of FIGURE 1, while blocks 406, 408, and 410 may be implemented by one of computing devices 118, 120, 122, or 124 of FIGURE 1 and block 412 may be implemented by DAG 116 of FIGURE 1, although process 400 and one or more of blocks 402, 404, 406, 408, 410, and 412 may be performed by different combinations of DAGs 114, 116, computing devices 118, 120, 122, 124, 126 and 130.

Process 400 begins, after a start block, at block 402 where, in one embodiment, a network packet is received from a client device, such as one of client devices 102-104 of FIGURE 1. The network packet may be directed towards a server device, such as server device 105 of FIGURE 1.

At block 404, a DAG selects one of the primary computing devices in the primary chassis to manage the received packet. Managing the received packet includes the primary computing device routing the packet to a computing device in the failover chassis for backup, although the DAG may route the packet to the computing device in the failover chassis. The DAG further forwards the packet to the server device, although in other embodiments the computing device in the primary or the failover chassis may forward the packet to the server device.

In one embodiment, each DAG may maintain a health status of the associated chassis. In one embodiment, the health status is a bit string, wherein each bit represents the health status of one of the plurality of computing devices. In one embodiment, the DAG uses the health status bit string as an index into a table mapping connections to computing devices for a given health status. In one embodiment, if all four computing devices (as illustrated in FIG. 1) are operating, the health status of the chassis may be 1111 (assuming 1 means operational and 0 means non-operational). In one embodiment, the health status may include all disaggregation states, for example, including blade health, and disaggregation algorithms used. Moreover, while the health status information may be 1111, in other embodiments, it may also be more complicated indicating a transitory or a permanent state. Moreover, the health status may include a table or other structured information which further provides status for an associated chassis and its computing devices. In any event, in some embodiments, this health status information may be used, in some embodiments, to select a primary computing device. The DAG may then forward the received packet to the selected primary computing device.

Processing flows next to block 406, which may be performed by the selected primary computing device. It should be noted that prior to and/or continually with process 400 each primary computing device establishes and maintained mesh connection with each of the available secondary computing devices. In one embodiment, a determination of whether a secondary computing device is available may be based on received information from a respective DAG, such as from its health status information of the failover chassis. In other embodiments, availability of a secondary computing device may be determined when a connection with the secondary computing device fails, times out, or otherwise cannot be established.

Thus, at block 406, the primary computing device knows which mesh connections are available to use. The primary computing device then identifies, at block 406, which mirrored computing device of the second plurality of computing devices to route the packets.

Flowing next to block 408, the primary computing device modifies the source port number of the received packets to identify the primary computing device and the secondary computing device, although the primary computing device may also or instead modify the destination port number of the received packets to identify the primary computing device and the secondary computing device and/or modify other packet fields, such as source and/or destination IP addresses, MAC addresses and the like. In one embodiment, the modified source port number may be a hash that includes a primary computing device identifier and a secondary computing device identifier. The identifiers may identify a particular blade and/or processor within a chassis, and/or a particular port on the chassis for the blade/processor.

Further, in some embodiments, the primary computing device may modify destination address/port number to indicate the packet is directed towards the failover DAG.

Flowing next to block 410, in one embodiment, a field within the packet headers may be modified to indicate that the receiving DAG is to recognize the packets for special processing based on the modified source port numbers. In one embodiment, the field may be a protocol field in the packet header. However, other fields or combination of fields may also be used.

In one embodiment, the field may include information indicating which direction the packets are flowing - e.g., from the primary chassis to the failover chassis, or from the failover chassis to the primary chassis.

Processing moves to block 412, where, in one embodiment, the modified packets are routed towards the failover DAG, where the failover DAG recognizes the packets for special processing based on the modified protocol field. The failover DAG then routes the modified packets to the secondary computing device using the information in the modified source port number. However, in another embodiment, information about the packets, but not the packets themselves may be routed towards the failover DAG. In still another embodiment, both the modified packets and the information about the packets may be provided to the failover DAG.

Responses from the secondary computing device are returned to the originating primary computing device based on the modified source port information. In one embodiment, the secondary computing device may modify the protocol field (or other field or fields) to another identifier indicating that the packets are to be specially processed. In some embodiments, the original source port information is maintained, such as in a data store. In some embodiments, the original source port information may be maintained by inserting bytes into the packet, or by overwriting unused fields within the packets with the original source port information.

In any event, process 400 may return to another process.

While the above process 400 discloses use of special processing based on the modified protocol field, other implementations are also considered. For example, in another embodiment, the mesh connections might be created by encapsulating TCP frames for each direction of the mirroring channel with UDP frames that include source/destination port information that causes the packets to be sent to a specific secondary computing device within the failover chassis. A return packet from the secondary computing device may also be encapsulated and source/destination port information may be selected that would hash to the desired computing device in the primary chassis.

However, other implementations may be employed. For example, in other embodiments, rather than employing a modified protocol field, the DAG's special rules discussed above might be triggered by a specially configured virtual local area network (VLAN) or other network field, including magic ports, IP addresses, or the like.

In yet, another embodiment, rather than using UDP to establish two (or more) uni-directional conduits between computing devices, TCP port numbers might be modified to allow routing to be performed. For example, the {source/ephemeral port number, destination port number} might be initially selected by the primary computing device for sending packets to a secondary computing device. Return packets from the secondary computing device might then include a modified destination (or source) TCP port number to allow packets to the primary computing device based on a hash of the TCP port number. Return port data can be embedded by the primary computing device in a synchronization (SYN) packet or sent out of band. Embedding of the port information in a SYN packet could be accomplished using a TCP sequence number, an optional timestamp field, or some other agreed upon field within a packet. The primary computing device might then create a flow using return port number(s) to receive packets from the secondary computing device. Similarly, the secondary computing device would transmit packets on this flow, using an agreed upon return port number(s).

In still other embodiments, rather than explicitly specifying a port number(s), the computing devices are configured to agree that return traffic will use an ephemeral port number(s) computed from an initiating ephemeral port number from primary computing device. For example, a SYN's source port number might be selected such that:

$$\text{Correct initiating destination} = \text{DAG\_hash(source port number)},$$

$$\text{Return port number} = F(\text{source port number}),$$

$$\text{Correct Return destination} = \text{DAG\_hash(return port number)},$$

Here, the return port number might be unused by the initiating primary computing device, treating the return port number as an ephemeral port number.

In the above, F represents a function F(), that is configured to swizzle bits, add a known offset, or to otherwise, convert a source port number into a return port number. In some embodiments, different source port numbers might be iterated upon to identify a number that satisfies the above criteria. Moreover, depending upon the selected DAG_hash() function, another function G() might be used to guide the selection of the source port numbers and thereby speed up the search for a matching criteria. Thus, other mechanisms may be used to enable selection of the secondary computing device, and to control the destination of packets between two devices in which a DAG is employed.

It will be understood that figures, and combinations of steps in the flowchart-like illustrations, can be implemented by computer program instructions. These program instructions may be provided to a processor to produce a machine, such that the instructions, which execute on the processor, create means for implementing the actions specified in the flowchart block or blocks. The computer program instructions may be executed by a processor to cause a series of operational steps to be performed by the processor to produce a computer implemented process such that the instructions, which execute on the processor to provide steps for implementing the actions specified in the flowchart block or blocks. These program instructions may be stored on a computer readable medium or machine readable medium, such as a computer readable storage medium.

Accordingly, the illustrations support combinations of means for performing the specified actions, combinations of steps for performing the specified actions and program instruction means for performing the specified actions. It will also be understood that each block of the flowchart illustration, and combinations of blocks in the flowchart illustration, can be implemented by modules such as special purpose hardware based systems which perform the specified actions or steps, or combinations of special purpose hardware and computer instructions.

The above specification, examples, and data provide a complete description of the manufacture and use of the composition of the described embodiments. Since many embodiments can be made without departing from the scope of this description, the embodiments defining the scope of the invention reside in the claims hereinafter appended.

**Claims**

1. A primary chassis (110) that includes a first plurality of computing devices (118, 120, 122, 124), each having at least one processor that is configured to perform actions, including:

   establishing a mesh connection (158) between each computing device within the first plurality of computing devices (118, 120, 122, 124) and each of a plurality of second computing devices (126, 128, 130) within a failover chassis(112);
   receiving packets from a client device (402) at a first computing device (118) within the first plurality of computing devices (118, 120, 122, 124);
   identifying a mirrored computing device within the plurality of second computing devices (126, 128, 130) for forwarding the received packets;
   modifying a field in each of the packet headers to identify the first computing device (118) and the mirrored computing device such that the failover chassis (112) can route the packets to the mirrored computing device based on the modified packet headers; and
   forwarding, by the first computing device over the mesh connection, the packets to the failover chassis (112) which is caused to route the packets to the mirrored computing device based on the modified field, wherein the mesh connection (158) instantiates a mirroring channel between the first computing device and the mirrored computing device, and wherein the mirroring channel encapsulates Transmission Control Protocol, TCP, frames of the packets in User Datagram Protocol, UDP, frames for each direction of communication with the mirroring channel,
   wherein return packets from the mirrored computing device are also encapsulated and include source port information and destination port information that hashes to the first computing device within the first plurality of computing devices.

2. The primary chassis (110) of claim 1, wherein the modified field is a modified source port number that is computed based on a hash of a combination of an identifier of the first computing device (118) and an identifier of the second computing device (126; 128; 130).

3. The primary chassis (110) of claim 1, wherein the mirrored computing device is configured to provide response packets to the first computing device (118), wherein the packets include a modified port number that combines a mirrored computing device identifier with a first computing device (118) identifier in a reversed order than used in the port number of the packets from the first computing device (118).

4. The primary chassis (110) of claim 1, wherein a disaggregator (DAG) associated with the primary chassis (110) is employed to select the first computing device (118) based on a health status of the primary chassis (110).

5. The primary chassis (110) of claim 1, wherein a health status of each of the plurality of second computing devices (126, 128, 130) in failover chassis (112) is used to identify the mirrored computing device.

6. The primary chassis (110) of claim 1, wherein the packets are further modified to include a flag within a protocol field indicating that the field is a modified port number.

7. A system comprising:
   a primary chassis (110) according to any one of claims 1 to 6, the primary chassis (110) having one or more processors capable of being configured to execute instructions to perform actions, including:

   receiving packets from a client device (402);
   selecting a first computing device (118) within a first plurality of computing devices of the primary chassis; and

forwarding the packets to the selected first computing device (118) (404).

8. The system of claim 7, wherein the primary chassis (110) includes a different number of computing devices from the failover chassis (112).

9. The system of claim 7, wherein a header of the packets is modified to include a flag that indicates a modified field is included within the packets.

10. The system of claim 7, wherein the packets received from the client device are forwarded to a destination server device by the mirrored computing device in the failover chassis (112).

11. The system of claim 7, wherein the mirrored computing device is configured to provide response packets to the first computing device, wherein the packets include a modified port number that combines a mirrored computing device identifier with a first computing device identifier in a reversed order than used in the port number of the packets from the first computing device.

12. A non-transitory processor readable storage medium storing processor readable instructions that when executed by a processor perform actions comprising:

establishing a mesh connection (158) between a first computing device (118) within a first plurality of computing devices (118, 120, 122, 124) within a primary chassis (110) and each of a plurality of second computing devices (126, 128, 130) within a failover chassis (112);
identifying a mirrored computing device within the plurality of second computing devices (126, 128, 130) for forwarding packets;
modifying a port number of the packets to identify the first computing device (118) and the mirrored computing device such that the failover chassis (112) can route the packets to the mirrored computing device based on the modified port number; and
forwarding the packets, over the mesh connection, to the failover chassis (112) which is caused to route the packets to the mirrored computing device based on the modified port number, wherein the mesh connection (158) instantiates a mirroring channel between the first computing device (118) and the mirrored computing device, and wherein the mirroring channel encapsulates Transmission Control Protocol, TCP, frames of the packets in User Datagram Protocol, UDP, frames for each direction of communication with the mirroring channel, wherein return packets from the mirrored computing device are also encapsulated and include source port information and destination port information that hashes to the first computing device within the first plurality of computing devices.

13. The non-transitory processor readable storage medium of claim 12, wherein the modified port number is a modified destination port number that is computed based on a hash of a combination of an identifier of the first computing device (118) and an identifier of the second computing device(126; 128; 130).

**Patentansprüche**

1. Ein primäres Chassis (110), das eine erste Vielzahl von Rechenvorrichtungen (118, 120, 122, 124) beinhaltet, wobei jede mindestens einen Prozessor aufweist, der zum Durchführen von Aktionen konfiguriert ist, die folgende beinhalten:

Herstellen einer Netzverbindung (158) zwischen jeder Rechenvorrichtung innerhalb der ersten Vielzahl von Rechenvorrichtungen (118, 120, 122, 124) und jeder aus einer Vielzahl von zweiten Rechenvorrichtungen (126, 128, 130) innerhalb eines Failover-Chassis (112);
Empfangen von Paketen von einer Clientvorrichtung (402) an einer ersten Rechenvorrichtung (118) innerhalb der ersten Vielzahl von Rechenvorrichtungen (118, 120, 122, 124);
Identifizieren einer gespiegelten Rechenvorrichtung innerhalb der Vielzahl von zweiten Rechenvorrichtungen (126, 128, 130) zur Weiterleitung der empfangenen Pakete;
Ändern eines Feldes in jedem der Paketköpfe, um die erste Rechenvorrichtung (118) und die gespiegelte Rechenvorrichtung zu identifizieren, derart, dass das Failover-Chassis (112) die Pakete basierend auf den geänderten Paketköpfen an die gespiegelte Rechenvorrichtung leiten kann; und
Weiterleiten, durch die erste Rechenvorrichtung über die Netzverbindung, der Pakete an das Failover-Chassis (112), das veranlasst wird, die Pakete basierend auf dem geänderten Feld an die gespiegelte Rechenvorrichtung zu leiten, wobei die Netzverbindung (158) einen Spiegelungskanal zwischen der ersten Rechenvorrichtung und der gespiegelten Rechenvorrichtung instanziiert und wobei der Spiegelungskanal für jede Richtung der Kommunikation mit dem Spiegelungskanal TCP-Rahmen (Transmission Control Protocol, Übertragungssteuerungsprotokoll) der Pakete in UDP-Rahmen (User Datagram Protocol, Benutzer-Datagramm-Protokoll) kapselt, wobei die Rückgabepakete von der gespiegelten Rechenvorrichtung ebenfalls gekapselt werden und Quellportinformationen und Zielportinformationen beinhalten, die in die erste Rechenvorrichtung innerhalb der ersten Vielzahl von Rechenvorrichtungen gehasht werden.

2. Das primäre Chassis (110) nach Anspruch 1, wobei es sich bei dem geänderten Feld um eine geänderte Quellportnummer handelt, die basierend auf einem Hash einer Kombination aus einer Kennung der ersten Rechenvorrichtung (118) und einer Kennung der zweiten Rechenvorrichtung (126; 128; 130) berechnet wird.

3. Das primäre Chassis (110) nach Anspruch 1, wobei die gespiegelte Rechenvorrichtung so konfiguriert ist, dass sie der ersten Rechenvorrichtung (118) Antwortpakete bereitstellt, wobei die Pakete eine geänderte Portnummer beinhalten, die eine Kennung einer gespiegelten Rechenvorrichtung in umgekehrter Reihenfolge als in der Portnummer der Pakete von der ersten Rechenvorrichtung (118) verwendet mit einer Kennung einer ersten Rechenvorrichtung (118) kombiniert.

4. Das primäre Chassis (110) nach Anspruch 1, wobei ein dem primären Chassis (110) zugeordneter Disaggregator (DAG) eingesetzt wird, um die erste Rechenvorrichtung (118) basierend auf einem Integritätsstatus des primären Chassis (110) auszuwählen.

5. Das primäre Chassis (110) nach Anspruch 1, wobei ein Integritätsstatus von jeder aus der Vielzahl von zweiten Rechenvorrichtungen (126, 128, 130) in dem Failover-Chassis (112) zur Identifizierung der gespiegelten Rechenvorrichtung verwendet wird.

6. Das primäre Chassis (110) nach Anspruch 1, wobei die Pakete weiter so geändert werden, dass sie eine Kennzeichnung innerhalb eines Protokollfeldes beinhalten, die angibt, dass es sich bei dem Feld um eine geänderte Portnummer handelt.

7. Ein System, umfassend:
ein primäres Chassis (110) nach einem der Ansprüche 1 bis 6, wobei das primäre Chassis (110) einen oder mehrere Prozessoren aufweist, die so konfiguriert werden können, dass sie Anweisungen zum Durchführen von Aktionen ausführen, die folgende beinhalten:

Empfangen von Paketen von einer Clientvorrichtung (402);
Auswählen einer ersten Rechenvorrichtung (118) innerhalb einer ersten Vielzahl von Rechenvorrichtungen des primären Chassis; und
Weiterleiten der Pakete an die ausgewählte erste Rechenvorrichtung (118) (404).

8. Das System nach Anspruch 7, wobei das primäre Chassis (110) eine andere Anzahl an Rechenvorrichtungen als das Failover-Chassis (112) beinhaltet.

9. Das System nach Anspruch 7, wobei ein Kopf der Pakete so geändert wird, dass er eine Kennzeichnung beinhaltet, die angibt, dass innerhalb der Pakete ein geändertes Feld beinhaltet ist.

10. Das System nach Anspruch 7, wobei die von der Clientvorrichtung empfangenen Pakete durch die gespiegelte Rechenvorrichtung in dem Failover-Chassis (112) an eine Zielservervorrichtung weitergeleitet werden.

11. Das System nach Anspruch 7, wobei die gespiegelte Rechenvorrichtung so konfiguriert ist, dass sie der ersten Rechenvorrichtung Antwortpakete bereitstellt, wobei die Pakete eine geänderte Portnummer beinhalten, die eine Kennung einer gespiegelten Rechenvorrichtung in umgekehrter Reihenfolge als in der Portnummer der Pakete von der ersten Rechenvorrichtung verwendet mit einer Kennung einer ersten Rechenvorrichtung kombiniert.

12. Ein nicht vorübergehendes prozessorlesbares Speichermedium mit darauf gespeicherten prozessorlesbaren Anweisungen, die bei Ausführung durch einen Prozessor Aktionen ausführen, die folgende umfassen:

Herstellen einer Netzverbindung (158) zwischen einer ersten Rechenvorrichtung (118) innerhalb einer ersten Vielzahl von Rechenvorrichtungen (118, 120, 122, 124) innerhalb eines primären Chassis (110) und jeder aus einer Vielzahl von zweiten Rechenvorrichtungen (126, 128, 130) innerhalb eines Failover-Chassis (112); Identifizieren einer gespiegelten Rechenvorrichtung innerhalb der Vielzahl von zweiten Rechenvorrichtungen (126, 128, 130) zur Weiterleitung von Paketen; Ändern einer Portnummer der Pakete, um die erste Rechenvorrichtung (118) und die gespiegelte Rechenvorrichtung zu identifizieren, derart, dass das Failover-Chassis (112) die Pakete basierend auf der geänderten Portnummer an die gespiegelte Rechenvorrichtung leiten kann; und Weiterleiten der Pakete, über die Netzverbindung, an das Failover-Chassis (112), das veranlasst wird, die Pakete basierend auf der geänderten Portnummer an die gespiegelte Rechenvorrichtung zu leiten, wobei die Netzverbindung (158) einen Spiegelungskanal zwischen der ersten Rechenvorrichtung (118) und der gespiegelten Rechenvorrichtung instanziiert und wobei der Spiegelungskanal für jede Richtung der Kommunikation mit dem Spiegelungskanal TCP-Rahmen (Transmission Control Protocol, Übertragungssteuerungsprotokoll) der Pakete in UDP-Rahmen (User Datagram Protocol, Benutzer-Datagramm-Protokoll) kapselt, wobei die Rückgabepakete von der gespiegelten Rechenvorrichtung ebenfalls gekapselt werden und Quellportinformationen und Zielportinformationen beinhalten, die in die erste Rechenvorrichtung innerhalb der ersten Vielzahl von Rechenvorrichtungen gehasht werden.

13. Das nicht vorübergehende prozessorlesbare Speichermedium nach Anspruch 12, wobei es sich bei der geänderten Portnummer um eine geänderte Zielportnummer handelt, die basierend auf einem Hash einer Kombination aus einer Kennung der ersten Rechenvorrichtung (118) und einer Kennung der zweiten Rechenvorrichtung (126; 128; 130) berechnet wird.

**Revendications**

1. Un châssis primaire (110) qui comprend une première pluralité de dispositifs informatiques (118, 120, 122, 124), chacun d'eux possédant au moins un processeur qui est configuré de façon à exécuter des actions, comprenant :

   l'établissement d'une connexion maillée (158) entre chaque dispositif informatique à l'intérieur de la première pluralité de dispositifs informatiques (118, 120, 122, 124) et chaque dispositif d'une pluralité de deuxièmes dispositifs informatiques (126, 128, 130) à l'intérieur d'un châssis de secours (112), la réception de paquets à partir d'un dispositif client (402) au niveau d'un premier dispositif informatique (118) à l'intérieur de la première pluralité de dispositifs informatiques (118, 120, 122, 124), l'identification d'un dispositif informatique miroir à l'intérieur de la pluralité de deuxièmes dispositifs informatiques (126, 128, 130) destiné au transfert des paquets reçus, la modification d'un champ dans chacun des entêtes de paquet de façon à identifier le premier dispositif informatique (118) et le dispositif informatique miroir de sorte que le châssis de secours (112) puisse acheminer les paquets vers le dispositif informatique miroir en fonction des entêtes de paquet modifiés, et le transfert, par le premier dispositif informatique par l'intermédiaire de la connexion maillée, des paquets vers le châssis de secours (112) qui est amené à acheminer les paquets vers le dispositif informatique miroir en fonction du champ modifié, où la connexion maillée (158) instancie un canal d'écriture miroir entre le premier dispositif informatique et le dispositif informatique miroir, et où le canal d'écriture miroir encapsule des trames de protocole de contrôle de transmission, TCP, des paquets dans des trames de protocole de datagramme utilisateur, UDP, pour chaque direction de communication avec le canal d'écriture miroir, où des paquets en retour à partir du dispositif informatique miroir sont également encapsulés et comprennent des informations de port source et des informations de port de destination qui sont hâchées vers le premier dispositif informatique à l'intérieur de la première pluralité de dispositifs informatiques.

2. Le châssis primaire (110) selon la Revendication 1, où le champ modifié est un numéro de port source modifié qui est calculé en fonction d'un hachage d'une combinaison d'un identifiant du premier dispositif informatique (118) et d'un identifiant du deuxième dispositif informatique (126; 128; 130).

3. Le châssis primaire (110) selon la Revendication 1, où le dispositif informatique miroir est configuré de façon à fournir des paquets en réponse au premier dispositif informatique (118), où les paquets comprennent un numéro de port modifié qui combine un identifiant de dispositif informatique miroir avec un identifiant de premier dispositif informatique (118) dans un ordre inverse à celui utilisé dans le numéro de port des paquets provenant du premier dispositif informatique (118).

4. Le châssis primaire (110) selon la Revendication 1, où un désagrégateur (DAG) associé au châssis primaire (110) est employé de façon à sélectionner le premier dispositif informatique (118) en fonction d'un état de santé du châssis primaire (110).

5. Le châssis primaire (110) selon la Revendication 1, où un état de santé de chaque dispositif de la pluralité de deuxièmes dispositifs informatiques (126, 128, 130) dans le châssis de secours (112) est utilisé de façon à identifier le dispositif informatique miroir.

6. Le châssis primaire (110) selon la Revendication 1, où les paquets sont modifiés en outre de façon à inclure une balise à l'intérieur d'un champ de protocole indiquant que le champ est un numéro de port modifié.

7. Un système comprenant :
   un châssis primaire (110) selon l'une quelconque des Revendications 1 à 6, le châssis primaire (110) possédant un ou plusieurs processeurs pouvant être configurés de façon à exécuter des instructions destinées à l'exécution d'actions, comprenant :

   la réception de paquets à partir d'un dispositif client (402),
   la sélection d'un premier dispositif informatique (118) à l'intérieur d'une première pluralité de dispositifs informatiques du châssis primaire, et
   le transfert des paquets vers le premier dispositif informatique sélectionné (118) (404).

8. Le système selon la Revendication 7, où le châssis primaire (110) comprend un nombre différent de dispositifs informatiques provenant du châssis de secours (112).

9. Le système selon la Revendication 7, où un entête des paquets est modifié de façon à inclure une balise qui indique qu'un champ modifié est inclus à l'intérieur des paquets.

10. Le système selon la Revendication 7, où les paquets reçus à partir du dispositif client sont transférés vers un dispositif serveur de destination par le dispositif informatique miroir dans le châssis de secours (112).

11. Le système selon la Revendication 7, où le dispositif informatique miroir est configuré de façon à fournir des paquets en réponse au premier dispositif informatique, où les paquets comprennent un numéro de port modifié qui combine un identifiant de dispositif informatique miroir avec un identifiant de premier dispositif informatique dans un ordre inverse à celui utilisé dans le numéro de port des paquets provenant du premier dispositif informatique.

12. Un support à espace mémoire lisible par un processeur non transitoire conservant en mémoire des instructions lisibles par un processeur qui, lorsqu'elles sont exécutées par un processeur, exécutent des actions comprenant :

    l'établissement d'une connexion maillée (158) entre un premier dispositif informatique (118) à l'intérieur d'une première pluralité de dispositifs informatiques (118, 120, 122, 124) à l'intérieur d'un châssis primaire (110) et chaque dispositif d'une pluralité de deuxièmes dispositifs informatiques (126, 128, 130) à l'intérieur d'un châssis de secours (112),
    l'identification d'un dispositif informatique miroir à l'intérieur de la pluralité de deuxièmes dispositifs informatiques (126, 128, 130) destiné au transfert de paquets,
    la modification d'un numéro de port des paquets de façon à identifier le premier dispositif informatique (118) et le dispositif informatique miroir de sorte que le châssis de secours (112) puisse acheminer les paquets vers le dispositif informatique miroir en fonction du numéro de port modifié, et
    le transfert des paquets, par l'intermédiaire de la connexion maillée, vers le châssis de secours (112) qui est amené à acheminer les paquets vers le dispositif informatique miroir en fonction du numéro de port modifié, où la connexion maillée (158) instancie un canal d'écriture miroir entre le premier dispositif informatique (118) et le dispositif informatique miroir, et où le canal d'écriture miroir encapsule des trames de protocole de contrôle de transmission, TCP, des paquets dans des trames de protocole de datagramme utilisateur, UDP, pour chaque direction de communication avec le canal d'écriture miroir, où des paquets en retour provenant du dispositif informatique miroir sont également encapsulés et comprennent des informations de port source et des informations de port de destination qui sont hâchées vers le premier dispositif informatique à l'intérieur de la première pluralité de dispositifs informatiques.

13. Le support à espace mémoire lisible par un processeur non transitoire selon la Revendication 12, où le numéro de port modifié est un numéro de port de destination modifié qui est calculé en fonction d'un hachage d'une combinaison d'un identifiant du premier dispositif informatique (118) et d'un identifiant du deuxième dispositif informatique (126; 128; 130).

**FIG. 1**

*200*

DISAGGREGATOR (DAG)

CENTRAL PROCESSING UNIT *212*

*216*

*220* RAM

OPERATING SYSTEM

DISAGGREGATION MODULE

CD-ROM/ DVD-ROM DRIVE

*226*

*222* *210*

NETWORK INTERFACE UNIT

*252* INPUT/OUTPUT INTERFACE

*224*

HARD DISK DRIVE *228*

ROM *232*

BIOS *218*

VIDEO DISPLAY ADAPTER

*214*

**FIG. 2**

300

COMPUTING DEVICE

CENTRAL PROCESSING UNIT — 312

316

322

310

320

RAM

OPERATING SYSTEM

CONNECTION CREATION MODULE

CD-ROM/ DVD-ROM DRIVE — 326

INPUT/OUTPUT INTERFACE

NETWORK INTERFACE UNIT

350

324

HARD DISK DRIVE — 328

ROM — 332

BIOS — 318

VIDEO DISPLAY ADAPTER — 314

**FIG. 3**

400

START

*114*

402   RECEIVE PACKETS OF A FIRST CONNECTION FROM CLIENT DEVICE

404   FORWARD THE RECEIVED PACKETS TO A COMPUTING DEVICE OF A FIRST PLURALITY OF COMPUTING DEVICES

*118*

406   IDENTIFY A SECONDARY COMPUTING DEVICE OF THE SECOND PLURALITY OF COMPUTING DEVICES WITH MESH

408   MODIFY SOURCE PORT NUMBER OF THE RECEIVED PACKETS TO IDENTIFY THE COMPUTING DEVICE AND THE SECONDARY COMPUTING DEVICE

410   MODIFY PROTOCOL FIELD OF THE RECEIVED PACKETS TO IDENTIFY SPECIAL ROUTING PACKETS

412   ROUTE PACKETS WITH MODIFIED SOURCE PORT NUMBER TO THE SECONDARY COMPUTING DEVICE (THROUGH DAGS)

RETURN

*FIG. 4*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010128598 A